# EUROPEAN PATENT APPLICATION

(11) **EP 2 664 758 A2**
(43) Date of publication of application: **20.11.2013**
(21) Application number: 13166403.9
(22) Date of filing: 03.05.2013
(51) Int. Cl.: F01N 3/20, F02D 41/02

(54) **Exhaust emission control apparatus and exhaust emission control method for internal combustion engine**

(30) Priority: 17.05.2012 JP 2012113404
(71) Applicant: TOYOTA JIDOSHA KABUSHIKI KAISHA, Toyota-shi, Aichi-ken, 471-8571 (JP)
(72) Inventor: AOYAGI, Yusuke, Toyota-shi,, Aichi 471-8571 (JP)
(74) Representative: Winter, Brandl, Fürniss, Hübner, Röss, Kaiser, Polte - Partnerschaft

(57) **Abstract**

An exhaust emission control apparatus is equipped with an SCR catalyst 12 that is provided in an exhaust passage 11 of an internal combustion engine 10, and an addition valve 30 that adds a reducing agent to the SCR catalyst 12. The exhaust emission control apparatus performs an increasing process of increasing an amount of the reducing agent added from the addition valve 30 when a NOx purification capacity of the SCR catalyst 12 is lower than a target capacity. The exhaust emission control apparatus performs a process of burning out deposits when the NOx purification capacity of the SCR catalyst 12 has fallen along with the performance of the increasing process.

## Description

### BACKGROUND OF THE INVENTION

### 1. Field of the Invention

The invention relates to an exhaust emission control apparatus and an exhaust emission control method for an internal combustion engine.

### 2. Description of Related Art

As an exhaust emission control apparatus for an internal combustion engine such as a diesel engine or the like that is often operated in such a manner as to make the air-fuel ratio lean, a control apparatus that is equipped with a urea selective reduction catalyst has been known. In this exhaust emission control apparatus, an ammonic reducing agent such as an aqueous solution of urea or the like is added to the selective reduction catalyst through an addition valve, and nitrogen oxides (NOx) in exhaust gas are reduced and purified by the reducing agent.

Besides, in the exhaust emission control apparatus that is equipped with the urea selective reduction catalyst, the aqueous solution of urea or the like that is used as the reducing agent degenerates due to the heat of exhaust gas or the like. Thus, in the exhaust emission control apparatus that is equipped with the urea selective reduction catalyst, deposits originating in urea may be generated. When these deposits are accumulated, for example, in the vicinity of the addition valve or the like, the amount or atomization mode of the reducing agent injected from the addition valve cannot be made to match a requirement. Thus, the NOx purification capacity of the selective reduction catalyst is lower than a target capacity. Thus, in an exhaust emission control apparatus described in Japanese Patent Application Publication No. 2008-274952 (JP-2008-274952 A), a process of raising the temperature of exhaust gas to bum out accumulated deposits is regularly performed.

A fall in the NOx purification capacity of the selective reduction catalyst is caused not only when deposits are accumulated but also, for example, when the addition capacity of the addition valve falls through aging. That is, when the actual addition amount of the addition valve is smaller than an amount matching a drive command value thereof, an originally required amount of the reducing agent cannot be added to the selective reduction catalyst, and hence the NOx purification capacity of the selective reduction catalyst is low. Then, in the case where the NOx purification capacity of the selective reduction catalyst is low as a result of such a fall in the addition capacity of the addition valve, this fall in the NOx purification capacity cannot be resolved even if the burnout process is performed, and a deterioration in fuel economy is caused.

### SUMMARY OF THE INVENTION

The invention provides an exhaust emission control apparatus and an exhaust emission control method for an internal combustion engine that can distinguish between a fall in the addition capacity of an addition valve and the accumulation of deposits as a cause of a fall in the NOx purification capacity, and perform a process of burning out deposits on the basis of a determination that deposits are accumulated.

An exhaust emission control apparatus for an internal combustion engine according to a first aspect of the invention has a urea selective reduction catalyst that is provided in an exhaust passage, and a reducing agent is added to this selective reduction catalyst from an addition valve. In addition, the exhaust emission control apparatus performs an increasing process of increasing an amount of the reducing agent added from the addition valve, and performs a process of burning out deposits when a NOx purification capacity of the selective reduction catalyst falls along with the performance of this increasing process.

In the case where the addition capacity of the addition valve falls and the NOx purification capacity is lower than a target capacity as a result of a state where the amount of the reducing agent added from the addition valve is smaller than a required amount, when the increasing process of increasing the addition amount of this reducing agent is performed, the amount of the reducing agent added to the selective reduction catalyst increases, and hence the NOx purification capacity of the selective reduction catalyst rises. On the other hand, in the case where the NOx purification capacity is lower than the target capacity as a result of the accumulation of deposits, when this increasing process of the reducing agent is performed, the accumulation of deposits is promoted by the reducing agent that is added from the addition valve. As a result, the amount of the reducing agent added to the selective reduction catalyst decreases, and the NOx purification capacity of the selective reduction catalyst further falls.

Accordingly, by thus performing the process of burning out deposits when the NOx purification capacity of the selective reduction catalyst has further fallen along with the performance of the increasing process, the process of burning out deposits can be performed as a result of an accurate determination that deposits are accumulated, and fuel economy can be restrained from deteriorating due to the performance of an unnecessary burnout process. It can be determined that the NOx purification capacity of the selective reduction catalyst has thus fallen along with the performance of the increasing process, on the basis of, for example, a fall in the NOx purification rate of the selective reduction catalyst, an increase in the amount of NOx discharged from the selective reduction catalyst per unit time, a decrease in the difference between the amount of NOx flowing into the selective reduction catalyst per unit time and the amount of NOx discharged per unit time (the amount of NOx flowing in - the amount of discharged NOx), a rise in the concentration of NOx in exhaust gas discharged from the selective reduction catalyst, a fall in the difference between the concentration of NOx in exhaust gas flowing into the selective reduction catalyst and the concentration of NOx in discharged exhaust gas (the concentration of NOx flowing in - the concentration of discharged NOx), or the like.

Besides, as described above, when the addition capacity of the addition valve falls and the NOx purification capacity is lower than the target capacity as a result of a state where the amount of the reducing agent added from the addition valve is smaller than an amount required of the selective reduction catalyst, the amount of the reducing agent added to the selective reduction catalyst increases through the performance of this increasing process, and hence the NOx purification capacity of the selective reduction catalyst rises.

The exhaust emission control apparatus for the internal combustion engine according to the first aspect of the invention may correct a target addition amount of the addition valve to increase and learn the corrected target addition amount as a new target addition amount when the NOx purification capacity of the selective reduction catalyst has risen.

By thus learning the target addition amount of the addition valve, the divergence between the amount of the reducing agent required of the selective reduction catalyst and the amount of the reducing agent actually added from the addition valve can be reduced, and a more appropriate amount of the reducing agent can be added to the selective reduction catalyst.

It should be noted herein that the increasing process for increasing the reducing agent can also be performed, for example, at intervals of a predetermined period. However, when no deposits are accumulated, the original addition capacity of the addition valve is maintained, and the reducing agent is added from the addition valve by the amount matching the requirement during the performance of the increasing process, an excessive amount of the reducing agent is added to the selective reduction catalyst. When the addition amount of the reducing agent thus becomes excessive, so-called ammonia slip, namely, a phenomenon that part of the reducing agent is discharged from the selective reduction catalyst without being adsorbed by the selective reduction catalyst may occur.

Besides, the exhaust emission control apparatus for the internal combustion engine according to the first aspect of the invention may perform the increasing process for increasing the reducing agent when it is determined that the NOx purification capacity of the selective reduction catalyst is lower than a target capacity.

According to this configuration, when the addition capacity of the addition valve has fallen, the reducing agent is added to the selective reduction catalyst by a more appropriate amount. On the other hand, when deposits are accumulated, the accumulation of the deposits is detected, and the process of burning out the deposits is performed. That is, in either case, the NOx purification capacity of the selective reduction catalyst can be raised, and ammonia slip can also be restrained from occurring as a result of the addition of an excessive amount of the reducing agent to the selective reduction catalyst.

Meanwhile, as described above, when the addition capacity of the addition valve has fallen after the process for increasing the reducing agent is performed, the NOx purification capacity of the selective reduction catalyst rises. On the other hand, when deposits are accumulated, the NOx purification capacity of the selective reduction catalyst further falls. However, when the addition amount of the reducing agent is increased through the increasing process, there are cases where changes in this NOx purification capacity are small or delayed. In such a case, it is difficult to accurately determine whether the NOx purification capacity has risen or fallen.

Besides, in the exhaust emission control apparatus for the internal combustion engine according to the first aspect of the invention, in the increasing process, the amount of the reducing agent added from the addition valve is gradually increased in a period in which it is determined that the NOx purification capacity of the selective reduction catalyst is lower than the target capacity.

According to this configuration, when the addition capacity of the addition valve has fallen, the amount of the reducing agent added to the selective reduction catalyst gradually increases, and, as the results, the magnitude of changes in the NOx purification capacity increases. Therefore, it can be more properly determined that the NOx purification capacity has risen.

On the other hand, when deposits are accumulated, the addition amount of the reducing agent is gradually increased, the accumulation amount of deposits also gradually increases, and, as the results, the magnitude of changes in the NOx purification capacity increases. Therefore, it can be more properly determined that the NOx purification capacity has fallen. Thus, by gradually increasing the addition amount of the reducing agent in the increasing process, it can be more properly determined whether the NOx purification capacity of the selective reduction catalyst has risen or fallen.

Besides, an exhaust emission control apparatus for an internal combustion engine according to a second aspect of the invention has a urea selective reduction catalyst that is provided in an exhaust passage, and a reducing agent is added to the selective reduction catalyst from an addition valve. The exhaust emission control apparatus performs an increasing process of gradually increasing an amount of the reducing agent added from the addition valve in a period in which it is determined that a NOx purification capacity of the selective reduction catalyst is lower than a target capacity. The exhaust emission control apparatus performs a process of burning out deposits when a period of performance of this increasing process of the reducing agent has reached a predetermined period.

In the case where the addition capacity of the addition valve falls and the NOx purification capacity is lower than the target capacity as a result of a state where the amount of the reducing agent added from the addition valve is smaller than the required amount, when the increasing process of gradually increasing the addition amount of this reducing agent is performed, the amount of the reducing agent added to the selective reduction catalyst gradually increases, and hence the NOx purification capacity of the selective reduction catalyst rises. As a result, the NOx purification capacity of the selective reduction catalyst recovers. Then, when the NOx purification capacity of the selective reduction catalyst thus recovers, it is not determined that the NOx purification capacity of the selective reduction catalyst is lower than the target capacity, and hence the process for reducing the amount of the reducing agent is stopped at that moment.

On the other hand, in the case where the NOx purification capacity is lower than the target capacity as a result of the accumulation of deposits, when this increasing process is performed, the accumulation of deposits is promoted through an increase in the amount of the reducing agent added from the addition valve. As a result, the accumulation amount further increases, and the amount of the reducing agent added to the selective reduction catalyst decreases. Then in this case, unlike the case where the addition capacity of the addition valve has fallen, the NOx purification capacity does not rise. Therefore, the process for increasing the amount of the reducing agent is not stopped from being increased through the increasing process.

Accordingly, when the period of performance of the increasing process has reached a predetermined period, it can be properly determined that the NOx purification capacity has fallen below the target capacity as a result of the accumulation of deposits. Then, by performing the process of burning out deposits under such a determination, fuel economy can be restrained from deteriorating due to the performance of an unnecessary burnout process.

Besides, the exhaust emission control apparatus for the internal combustion engine according to the second aspect of the invention may set this predetermined period as, for example, a period during which the amount of the reducing agent increases to reach a predetermined upper limit through the increasing process.

Besides, an exhaust emission control method for an internal combustion engine according to a third aspect of the invention includes performing an increasing process of increasing an amount of a reducing agent added from an addition valve to a urea selective reduction catalyst that is provided in an exhaust passage of the internal combustion engine, and performing a process of burning out deposits if an NOx purification capacity of the selective reduction catalyst has fallen along with the performance of the increasing process.

Besides, an exhaust emission control method for an internal combustion engine according to a fourth aspect of the invention includes performing an increasing process of gradually increasing an amount of a reducing agent added from an addition valve to a urea selective reduction catalyst that is provided in an exhaust passage of the internal combustion engine in a period in which it is determined that a NOx purification capacity of the selective reduction catalyst is lower than a target capacity, and performing a process of burning out deposits when a period of performance of the increasing process has reached a predetermined period.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a cross-sectional view of an exhaust emission control apparatus according to the first embodiment of the invention;
FIG. 2 is a flowchart showing a process procedure in burning out deposits;
FIG. 3 is a timing chart showing changes in a NOx purification rate and an addition amount of a reducing agent with the passage of time;
FIG. 4 is a flowchart showing a process procedure in burning out deposits in the second embodiment of the invention;
FIG. 5 is a timing chart showing changes in the NOx purification rate and the addition amount of the reducing agent with the passage of time;
FIG. 6 is a flowchart showing a process procedure in burning out deposits in the third embodiment of the invention;
FIG. 7 is a timing chart showing changes in the NOx purification rate and the addition amount of the reducing agent with the passage of time;
FIG. 8 is a cross-sectional view of an exhaust emission control apparatus according to another embodiment of the invention; and
FIG. 9 is a timing chart showing changes in the NOx purification rate and the addition amount of the reducing agent with the passage of time.

### DETAILED DESCRIPTION OF EMBODIMENTS

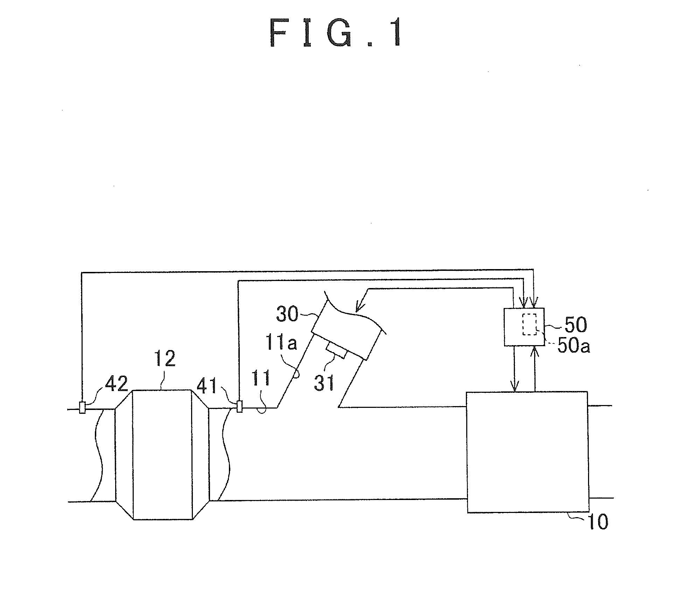

The first embodiment as a concrete form of an exhaust emission control apparatus for a diesel engine according to the invention will be described hereinafter with reference to FIGS. 1 to 3.

As shown in FIG. 1, a urea selective reduction catalyst (hereinafter referred to as "an SCR catalyst 12") is provided in an exhaust passage 11 of an engine 10. The exhaust passage 11 includes a branch passage 11a that branches off at upstream of this SCR catalyst 12 with respect to the flow of exhaust gas. An addition valve 30 that injects a reducing agent is fitted to an end of the branch passage 11a. An aqueous solution of urea is used as the reducing agent.

The reducing agent that has been injected to the branch passage 11a from a nozzle hole 31 of the addition valve 30 is introduced into the exhaust passage 11 through the branch passage 11a. Then, this reducing agent is hydrolyzed into ammonia due to the heat of exhaust gas, before being added to the SCR catalyst 12. As a result, in the SCR catalyst 12, NOx in exhaust gas are purified into nitrogen through a reduction reaction with ammonia.

Besides, a first NOx sensor 41 is provided in the exhaust passage 11 upstream of the SCR catalyst 12 with respect to the flow of exhaust gas, and a second NOx sensor 42 is provided in the exhaust passage 11 downstream of the SCR catalyst 12 with respect to the flow of exhaust gas. The first NOx sensor 41 detects a concentration Nin of NOx in exhaust gas flowing into the SCR catalyst 12. The second NOx sensor 42 detects a concentration Nout of NOx in exhaust gas discharged from the SCR catalyst 12. The NOx concentrations Nin and Nout detected by these NOx sensors 41 and 42 respectively are fetched by a control unit 50. Then, the control unit 50 calculates a NOx purification rate of the SCR catalyst 12 on the basis of a formula (1) shown below.

NOx purification rate ← (Nin-Nout)·100/Nin (%) (1)

The control unit 50 drives the addition valve 30 in an opening/closing manner, thereby injecting the reducing agent from the nozzle hole 31 of the addition valve 30. An addition amount of the reducing agent in this case is set on the basis of an engine operation state such as a flow rate of exhaust gas, an engine rotational speed or the like. The control unit 50 is equipped with a memory 50a. Programs and calculation maps for performing a process of driving the addition valve 30 in an opening/closing manner and other processes are stored in the memory 50a.

Meanwhile, part of the reducing agent that has been injected from the addition valve 30 degenerates into biuret, cyanuric acid and the like due to the influence of the heat of exhaust gas or the like, and may be accumulated on inner surfaces of the branch passage 11a and the exhaust passage 11 as deposits. For example, when these deposits are accumulated in the vicinity of the nozzle hole 31 of the addition valve 30 or the like, the amount and atomization mode of the reducing agent injected from the addition valve 30 cannot be made to match their requirements. Thus, the NOx purification capacity of the SCR catalyst 12 becomes lower than a target capacity determined based on the engine operation state. The control unit 50 monitors the NOx purification capacity of the SCR catalyst 12 on the basis of the NOx purification rate. When it is determined that this NOx purification capacity is lower than the target capacity, the control unit 50 performs a burnout process of burning out the deposits. In this burnout process, post injection is carried out to raise the temperature of exhaust gas to a temperature at which the deposits can be burned out, and the deposits are burned out.

However, the NOx purification capacity of the SCR catalyst 12 becomes low not only when the deposits are accumulated as described above but also, for example, when the addition capacity of the addition valve 30 has fallen through aging. That is, in the case where the actual addition amount of the addition valve 30 is smaller than an addition amount matching a drive command value for the addition valve 30, an originally required amount of the reducing agent cannot be added to the SCR catalyst 12, and hence the NOx purification capacity of the SCR catalyst 12 becomes low. In the case where the NOx purification capacity of the SCR catalyst 12 has thus become low as a result of a fall in the addition capacity of the addition valve 30, the fall in the purification capacity cannot be resolved even if the burnout process is performed. Thus, a deterioration in fuel economy is caused.

Thus, when the NOx purification capacity of the SCR catalyst 12 is low, the control unit 50 distinguishes between a fall in the addition capacity of the addition valve 30 and the accumulation of deposits as a cause of the low NOx purification capacity of the SCR catalyst 12. When it is determined that deposits are accumulated, the control unit 50 performs the process of burning out the deposits.

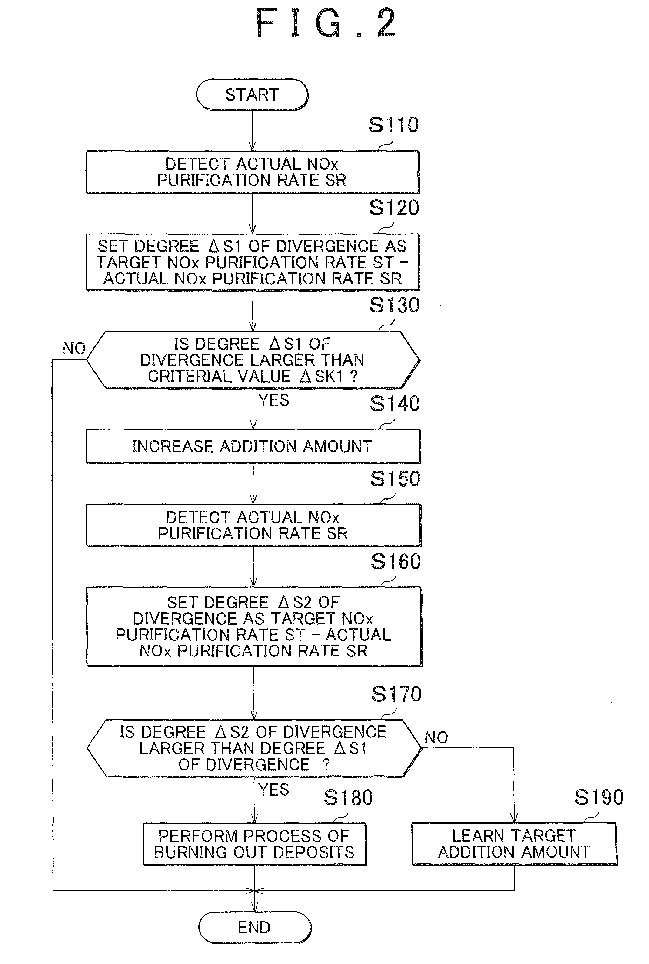

A series of processes performed by this control unit 50 will be described hereinafter. Incidentally, this series of processes are repeatedly performed on a predetermined control cycle. As shown in FIG. 2, in this series of processes, an actual value of the NOx purification rate (hereinafter referred to as "an actual NOx purification rate SR") is first detected on the basis of the foregoing formula (1) (step S110). A degree ΔS1 of divergence between a target value of the NOx purification rate (hereinafter referred to as "a target NOx purification rate ST") and the actual NOx purification rate SR (= the target NOx purification rate ST - the actual NOx purification rate SR) is then calculated (step S120). It should be noted herein that the target NOx purification rate ST is set on the basis of an engine operation state such as an engine rotational speed, an engine load or the like. It is then determined whether or not this degree ΔS1 of divergence is larger than a criterial value ΔSK1 (step S130). This criterial value ΔSK1 is a value for determining whether or not the NOx purification capacity of the SCR catalyst 12 is lower than a target capacity.

It should be noted herein that when the degree of divergence ΔS1 is equal to or smaller than the criterial value ΔSK1, it is determined that the degree of divergence ΔS1 between the target NOx purification rate ST and the actual NOx purification rate SR is small and the NOx purification capacity of the SCR catalyst 12 coincides with the target capacity, or that the difference between the NOx purification capacity of the SCR catalyst 12 and the target capacity, if there is any, is negligible (step S130: NO). When it is thus determined that the degree of divergence ΔS1 is equal to or smaller than the criterial value ΔSK1, this series of processes are temporarily ended.

On the other hand, when the degree of divergence ΔS1 is larger than the criterial value ΔSK1, namely, when the NOx purification capacity of the SCR catalyst 12 is lower than the target capacity (step S130: YES), the drive command value of the addition valve 30 is changed such that the amount of the reducing agent added from the addition valve 30 increases by a predetermined amount α (step S140). Then, after the amount of the reducing agent added from the addition valve 30 is thus increased, the actual NOx purification rate SR is detected again (step S150). A degree of divergence ΔS2 between the target NOx purification rate ST and the actual NOx purification rate SR is then calculated (step S160).

Subsequently, it is determined whether or not the degree of divergence ΔS2 after the performance of the process of increasing the addition amount in step S140 is larger than the degree of divergence ΔS1 before the performance of the process of increasing the addition amount in step S140 (step S170). Then, when the degree of divergence between the target NOx purification rate ST and the actual NOx purification rate SR has increased, namely, when the NOx purification capacity of the SCR catalyst 12 has further fallen (step S170: YES) through the performance of the process of increasing the addition amount, the process of burning out the deposits is performed (step S180).

On the other hand, when the degree of divergence between the target NOx purification rate ST and the actual NOx purification rate SR has decreased, namely, when the NOx purification capacity of the SCR catalyst 12 has risen through the performance of the process of increasing the addition amount (step S170: NO), the learning of a target addition amount QT of the addition valve 30 is carried out (step S190). In general, the target addition amount QT of the addition valve 30 coincides with a basic addition amount QB that is set on the basis of an engine operation state. However, in this process, the basic addition amount QB (= the target addition amount QT) is corrected to increase with a predetermined correction amount QG, and a corrected value of the basic addition amount QB is set as the new target addition amount QT. It should be noted herein that the correction amount QG can be obtained on the basis of, for example, a formula shown below in which the foregoing predetermined amount α and the respective degrees ΔS1 and ΔS2 of divergence are used: the correction amount QG ← α·ΔS1(ΔS1-ΔS2). When the target addition amount QT is thus learned, the learned target addition amount QT is reflected by the subsequent process of adding the reducing agent.

After the process of burning out the deposits (step S180) or the process of learning the target addition amount QT (step S190) is thus performed, this series of processes are ended. Next, the operation of the exhaust emission control apparatus according to this embodiment of the invention will be described.

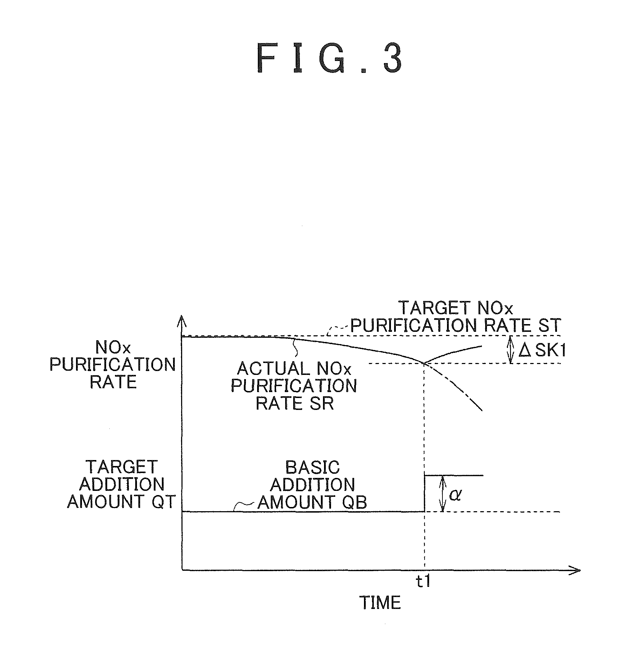

As shown in FIG. 3, when the actual NOx purification rate SR gradually decreases with respect to the target NOx purification rate ST and hence the degree of divergence ΔS1 therebetween reaches the criterial value ΔSK1, the process of increasing the addition amount is performed (at a timing tl). In the case where this increasing process is performed, the actual NOx purification rate SR thereafter changes as follows.

That is, when the addition capacity of the addition valve 30 falls and the actual NOx purification rate SR is lower than the target NOx purification rate ST as a result of a state where the amount of the reducing agent added from the addition valve 30 is smaller than a required amount, the amount of the reducing agent added to the SCR catalyst 12 increases to approach the required amount. Thus, as indicated by a solid line in FIG. 3, the actual NOx purification rate SR rises at and after the timing t1, and the degree of divergence between the target NOx purification rate ST and the actual NOx purification rate SR decreases. That is, the NOx purification capacity of the SCR catalyst 12 rises. Accordingly, in this case, the process of learning the target addition amount QT is performed so as to reduce the divergence between the amount of the reducing agent required of the SCR catalyst 12 and the amount of the reducing agent actually added from the addition valve 30.

On the other hand, when the actual NOx purification rate SR is lower than the target NOx purification rate ST as a result of a state where deposit is accumulated, the accumulation of deposits is promoted by increasing the amount of the reducing agent added from the addition valve 30, and hence the amount of the reducing agent added to the SCR catalyst 12 further decreases. Thus, as indicated by an alternate long and short dash line in FIG. 3, at and after the timing t1, the actual NOx purification rate SR further falls, and the degree of divergence between the target NOx purification rate ST and the actual NOx purification rate SR increases. That is, the NOx purification capacity of the SCR catalyst 12 further falls. Accordingly, in this case, the process of burning out the deposits is performed to bum out the accumulated deposits.

As described above, the exhaust emission control apparatus according to this embodiment of the invention can achieve the following effects. (1) When the degree of divergence between the target NOx purification rate ST and the actual NOx purification rate SR in the SCR catalyst 12 has increased, namely, when the NOx purification capacity of the SCR catalyst 12 has fallen along with the performance of the process of increasing the addition amount, the process of burning out the deposits is performed. Thus, the process of burning out the deposits can be performed on the basis of an accurate determination that the deposits are accumulated, and fuel economy can be restrained from deteriorating due to the performance of an unnecessary burnout process.

(2) When the degree ΔS2 of divergence between the target NOx purification rate ST and the actual NOx purification rate SR in the SCR catalyst 12 has decreased, namely, when the NOx purification capacity of the SCR catalyst 12 has risen along with the performance of the process of increasing the addition amount, the target addition amount QT of the addition valve 30 is corrected to increase, and a corrected value of the target addition amount QT is learned as the new target addition amount QT. Thus, the divergence between the amount of the reducing agent required of the SCR catalyst 12 and the amount of the reducing agent actually added from the addition valve 30 can be reduced, and a more appropriate amount of the reducing agent can be added to the SCR catalyst 12.

(3) The process of increasing the amount of the reducing agent added can also be performed, for example, at intervals of a predetermined period. When no deposits are accumulated and the original addition capacity of the addition valve 30 for adding the reducing agent is maintained, and the amount of the reducing agent matching the requirement is added from the addition valve 30 during the performance of the process of increasing the addition amount of the reducing agent, an excessive amount of the reducing agent is added to the SCR catalyst 12. When the addition amount of the reducing agent thus becomes excessive, there is a concern about the occurrence of so-called ammonia slip, namely, a phenomenon that part of the reducing agent is discharged from the SCR catalyst 12 without being adsorbed by the SCR catalyst 12. In this respect, the process of increasing the addition amount of the reducing agent added is performed when the degree of divergence between the target NOx purification rate ST and the actual NOx purification rate SR is equal to or smaller than the criterial value ΔSK1, namely, when the NOx purification capacity of the SCR catalyst 12 is lower than the target capacity. Therefore, the occurrence of ammonia slip as described above can be suppressed.

Next, the second embodiment of the invention will be described focusing on what is different from the foregoing first embodiment of the invention. In the first embodiment of the invention, the process of increasing the addition amount of the reducing agent added is performed in such a manner as to increase the target addition amount by the predetermined amount α. However, even if the target addition amount QT is thus increased, changes in the actual NOx purification rate SR are either small or delayed in some cases. In such a case, it may be difficult to accurately determine whether the NOx purification capacity has risen or fallen. Thus, the control unit 50 performs the process of increasing the addition amount of the reducing agent in such a manner as to gradually increase the amount of the reducing agent added from the addition valve 30 in a period in which it is determined that the NOx purification capacity of the SCR catalyst 12 is lower than the target capacity.

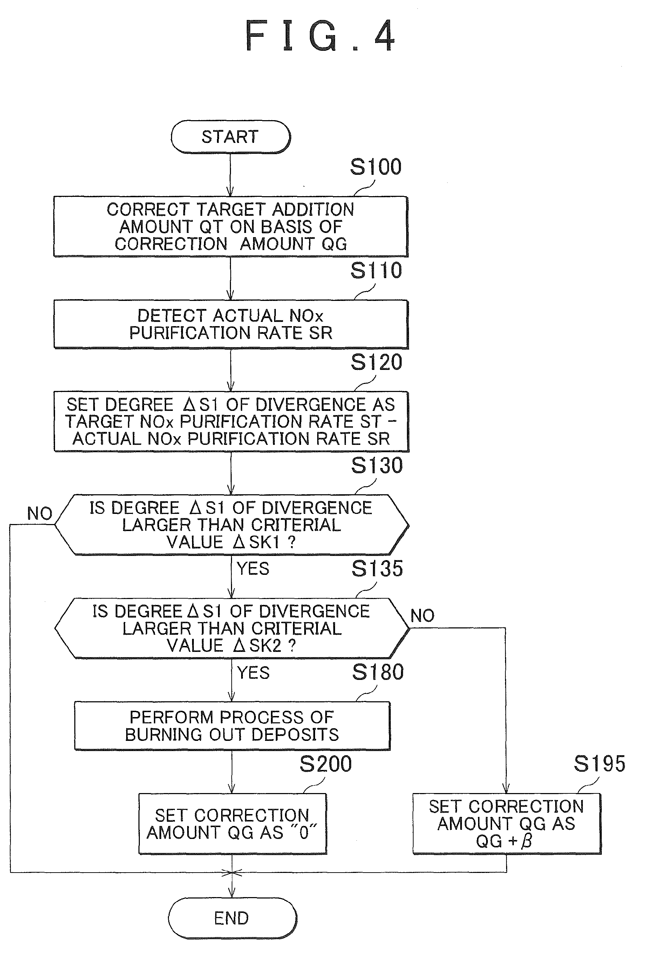

A series of processes performed by this control unit 50 will be described hereinafter. As shown in FIG. 4, in this series of processes, a correction amount QG is first added to the basic addition amount QB of the reducing agent (step S100). After the target addition amount QT is thus corrected on the basis of the correction amount QG, a transition to step S110 is made. Incidentally, since the contents of the respective processes of steps S110, S120, and S130 are the same as in the foregoing first embodiment of the invention, the description thereof is omitted. When the degree ΔS1 of divergence is larger than the criterial value ΔSK1 in step S130, it is further determined whether or not this degree ΔS1 of divergence is larger than another criterial value ΔSK2 (> ΔSK1) that is set to a value larger than the aforementioned criterial value ΔSK1 (step S135).

It should be noted herein that when it is determined that the degree ΔS1 of divergence is equal to or smaller than the criterial value ΔSK2 (step S135: NO), a predetermined amount β is added to the correction amount QG, and the summated value (QG+β) is set as the new correction amount QG. The correction amount QG is then stored into the memory 50a (step S195). After the correction amount QG is thus set, this series of processes are ended. The initial value of this correction amount QG is "0", and the correction amount QG gradually increases, namely, by the predetermined amount β every time the process of step S195 is performed. Accordingly, in the foregoing step S100, the target addition amount QT is corrected to increase on the basis of the correction amount QG that gradually increases through the process of this step S195.

On the other hand, when the degree ΔS1 of divergence is larger than the criterial value ΔSK2 (step S135: YES), the process of burning out deposits is performed (step S180). Then, when the process of burning out deposits is thus performed, the correction amount QG stored in the memory 50a is reset to "0" (step S200). When the correction amount QG is thus reset, the target addition amount QT is thereafter not corrected to increase on the basis of the correction amount QG in step S100.

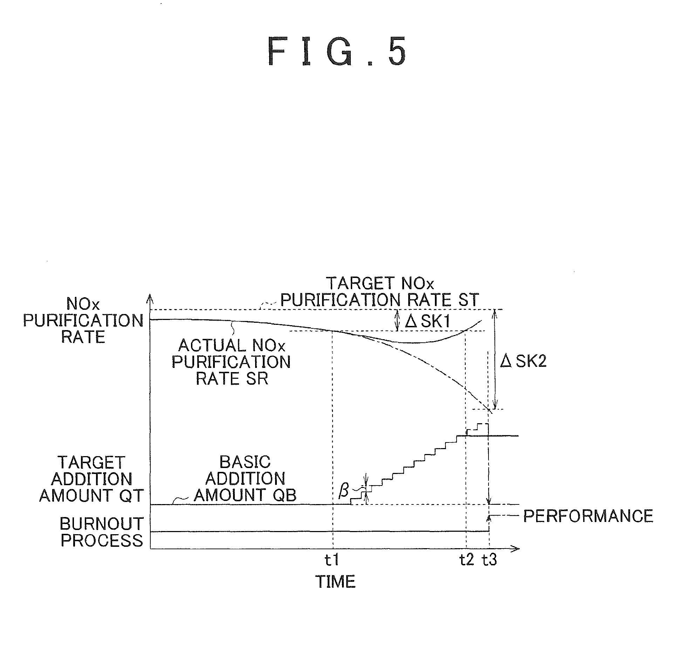

Next, the operation of the exhaust emission control apparatus according to this embodiment of the invention will be described. As shown in FIG. 5, when the actual NOx purification rate SR gradually falls with respect to the target NOx purification rate ST and hence the degree ΔS1 of divergence therebetween reaches the criterial value ΔSK1, the drive command value of the addition valve 30 is changed. Then, the target addition amount QT is gradually increased by the predetermined amount β (from the timing t1). Since the target addition amount QT thus increases, the actual NOx purification rate SR thereafter changes as follows.

That is, when the addition capacity of the addition valve 30 falls and the actual NOx purification rate SR is lower than the target NOx purification rate ST as a result of a state where the amount of the reducing agent added from the addition valve 30 is smaller than a required amount, the amount of the reducing agent added to the SCR catalyst 12 increases to approach the required amount.

Thus, as indicated by a solid line in FIG. 5, at and after the timing t1, the actual NOx purification rate SR gently rises, and the degree ΔS1 of divergence between the target NOx purification rate ST and the actual NOx purification rate SR decreases along with the rise in the actual NOx purification rate SR. That is, the NOx purification capacity of the SCR catalyst 12 rises. If the degree ΔS1 of divergence between the target NOx purification rate ST and the actual NOx purification rate SR then becomes equal to or smaller than the criterial value ΔSK1 (at a timing t2), the target addition amount QT is thereafter stopped from being corrected to increase.

On the other hand, when the actual NOx purification rate SR is lower than the target NOx purification rate ST as a result of a state where deposits is accumulated, the accumulation of deposits is promoted by increasing the amount of the reducing agent added from the addition valve 30, and hence the amount of the reducing agent added to the SCR catalyst 12 decreases. Thus, as indicated by an alternate long and short dash line in FIG. 5, at and after the timing t1, the actual NOx purification rate SR further falls, and the degree ΔS1 of divergence between the target NOx purification rate ST and the actual NOx purification rate SR increases. That is, the NOx purification capacity of the SCR catalyst 12 further falls. Then, when the degree ΔS1 of divergence between the target NOx purification rate ST and the actual NOx purification rate SR becomes larger than the criterial value ΔSK2 (at a timing t3), the process of burning out the deposits is performed, and the correction amount QG is reset to "0".

As described above, the exhaust emission control apparatus according to this embodiment of the invention can achieve the following effects. (4) In the process of increasing the amount of the reducing agent added, the amount of the reducing agent added from the addition valve 30 is gradually increased in a period in which the degree ΔS1 of divergence is larger than the criterial value ΔSK1, namely, in a period in which it is determined that the NOx purification capacity of the SCR catalyst 12 is lower than the target capacity. Accordingly, when the addition capacity of the addition valve 30 has fallen, the amount of the reducing agent added to the SCR catalyst 12 gradually increases, and the magnitude of changes in the NOx purification capacity increases along with the increase in the amount of the reducing agent added. Therefore, it can be more properly determined that the NOx purification capacity has risen.

On the other hand, when deposits are accumulated, the amount of the reducing agent added is gradually increased. Thus, the accumulation amount of deposits also gradually increases, and the magnitude of changes in the NOx purification capacity increases along therewith. Therefore, it can be more properly determined that the NOx purification capacity has fallen. By gradually increasing the amount of the reducing agent added in this manner, it can be more properly determined whether the NOx purification capacity of the SCR catalyst 12 has risen or fallen, even in the case where the actual NOx purification rate SR gently changes.

Next, the third embodiment of the invention will be described focusing on what is different from the foregoing second embodiment of the invention. In the second embodiment of the invention, in the process of increasing the addition amount, the amount of the reducing agent added from the addition valve 30 is gradually increased in a period in which it is determined that the NOx purification capacity of the SCR catalyst 12 is lower than the target capacity, and the process of burning out deposits is performed when the degree ΔS1 of divergence becomes larger than the criterial value ΔSK2 along with the increase in the amount of reducing agent. In this embodiment of the invention, when the amount of the reducing agent is gradually increased in a similar manner and the increase in the amount of the reducing agent, namely, the correction amount QG has reached a predetermined upper-limit, the process of burning out the deposits is performed.

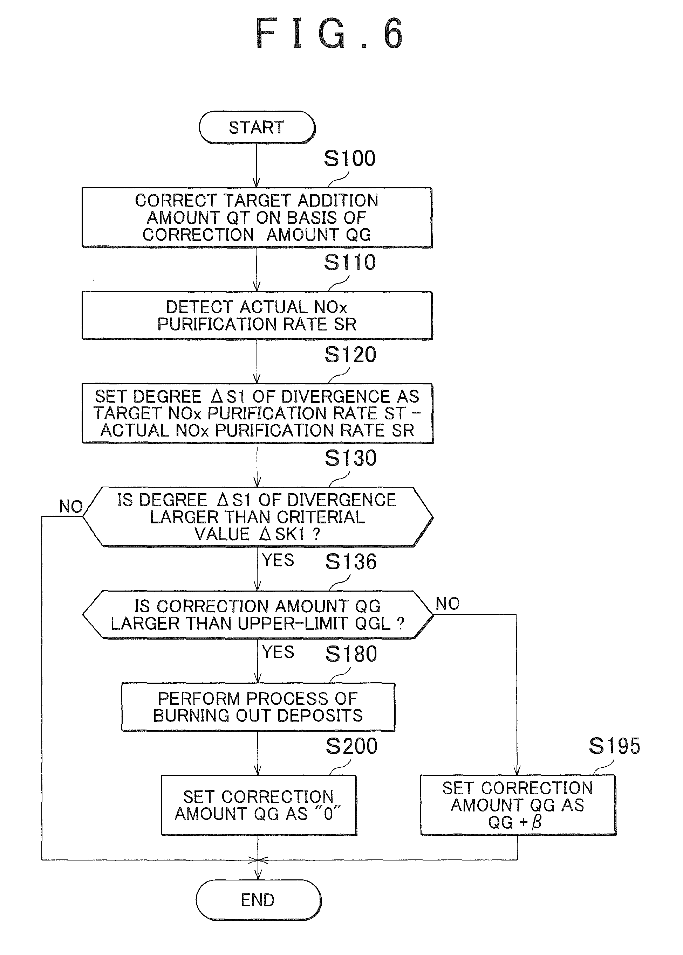

In a flowchart shown in FIG. 6, since the contents of the processes of steps S100, S110, S120, S130, S180, S195 and S200 are the same as in the foregoing second embodiment of the invention, the description thereof is omitted. In a series of processes shown in this flowchart, when the degree ΔS1 of divergence is larger than the criterial value ΔSK1 in step S130 (step S130: YES), it is determined whether or not the correction amount QG is larger than an upper-limit QGL thereof (step S136). This upper-limit QGL is set to an amount that is obtained, for example, by multiplying the basic addition amount QB of the reducing agent by a predetermined ratio such as "10%" or the like.

Then, when the correction amount QG is equal to or smaller than the upper-limit QGL (step S136: NO), a process of updating the correction amount QG is performed as described above (step S195). On the other hand, when the correction amount QG is larger than the upper-limit QGL (step S136: YES), a process of burning out the deposits (step S180) and a process of initializing the correction amount QG (step S200) are performed.

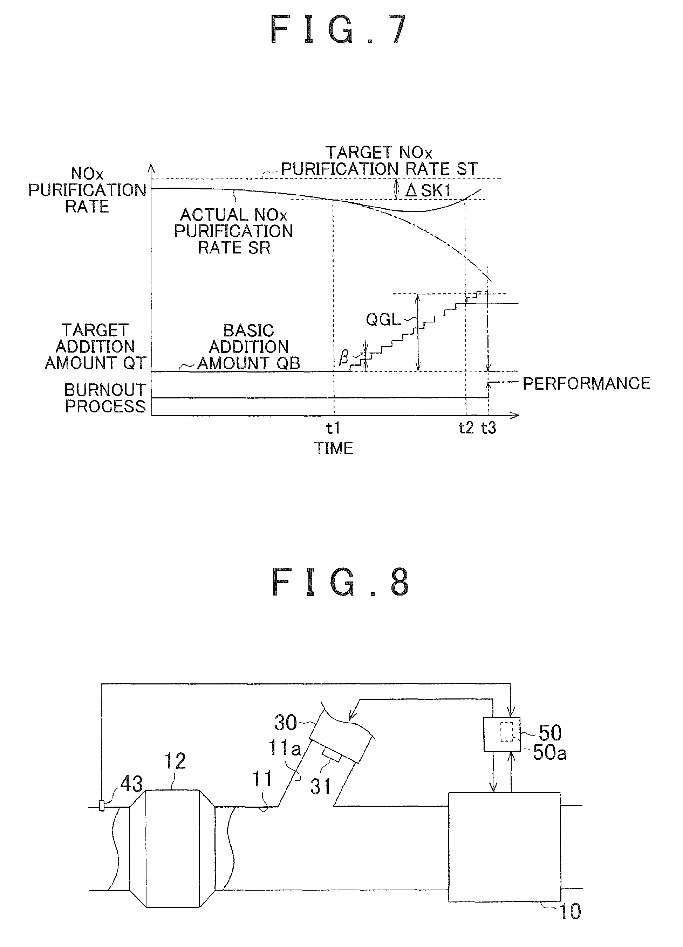

According to the aforementioned series of processes, when the addition capacity of the addition valve 30 for adding reducing agent falls and the actual NOx purification rate SR is lower than the target NOx purification rate ST as a result of a state where the amount of the reducing agent added from the addition valve 30 is smaller than a required amount, the target addition amount QT is corrected to increase, and hence the amount of the reducing agent added to the SCR catalyst 12 increases to approach the required amount. Thus, as indicated by a solid line in FIG. 7, at and after the timing t1, the actual NOx purification rate SR gently rises, and the degree ΔS1 of divergence between the target NOx purification rate ST and the actual NOx purification rate SR decreases due to the rise in the actual NOx purification rate SR. Then, when the degree ΔS1 of divergence between the target NOx purification rate ST and the actual NOx purification rate SR becomes equal to or smaller than the criterial value ΔSK1 (at the timing t2), the target addition amount QT is stopped from being corrected to increase.

On the other hand, when the actual NOx purification rate SR is lower than the target NOx purification rate ST as a result of the state where deposits are accumulated, the accumulation of deposits is promoted through an increase in the amount of the reducing agent added from the addition valve 30, and hence the amount of the reducing agent added to the SCR catalyst 12 decreases. Thus, as indicated by an alternate long and short dash line in FIG. 7, at and after the timing t1, the actual NOx purification rate SR further falls, and the degree ΔS1 of divergence between the target NOx purification rate ST and the actual NOx purification rate SR increases. That is, the NOx purification capacity of the SCR catalyst 12 further falls. Then, when the correction amount QG becomes larger than the upper-limit QGL by increasing the amount of the reducing agent (at a timing t3), the process of burning out the deposits is performed, and the correction amount QG is reset to "0". Accordingly, this embodiment of the invention can also achieve an effect similar to that of the second embodiment of the invention.

Although the respective embodiments of the invention have been described, these embodiments of the invention can also be implemented as modification examples that are altered as will be described below. In the third embodiment of the invention, when the correction amount QG becomes larger than the upper-limit QGL thereof, the process of burning out the deposits (step S180) and the process of initializing the correction amount QG (step S200) are performed. In contrast, it is also appropriate to monitor, for example, an elapsed time since the start of the process of increasing the amount of the reducing agent added, and perform the respective processes when the duration time of the increasing process has reached a predetermined time set in advance. It should be noted herein that this predetermined time is set to a time that is sufficient to determine that the NOx purification capacity of the SCR catalyst 12 does not recover, the accumulation of deposits is promoted, and the NOx purification capacity falls even if the process of increasing the amount of the reducing agent added is performed.

In each of the respective embodiments of the invention, a determination on the NOx purification capacity of the SCR catalyst 12 is made on the basis of the degree of divergence between the target NOx purification rate ST and the actual NOx purification rate SR. That is, it is determined that the NOx purification capacity of the SCR catalyst 12 falls with respect to the target capacity as this degree of divergence increases. It should be noted herein that the ratio (SR/ST) of the actual NOx purification rate SR to the target NOx purification rate ST as well as the deviation (= ST-SR) between the target NOx purification rate ST and the actual NOx purification rate SR as exemplified in each of the embodiments of the invention can be adopted as this degree of divergence. Besides, the concentration Nin of NOx in exhaust gas flowing into the SCR catalyst 12 can also be estimated, for example, on the basis of an engine operation state such as an engine rotational speed and an engine load or the like, without using the first NOx sensor 41.

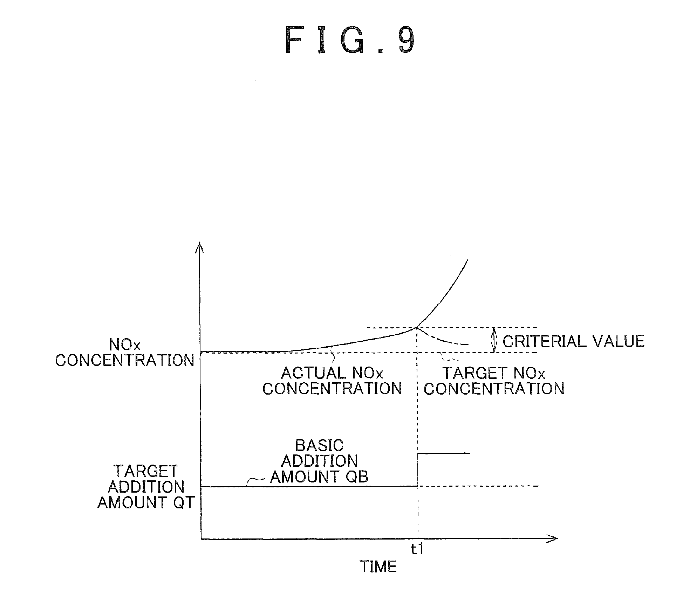

Besides, a determination on the NOx purification capacity of the SCR catalyst 12 can also be made on the basis of the concentration of NOx. For example, as shown in FIG. 8, there is adopted a configuration in which a NOx sensor 43 that detects a concentration of NOx in exhaust gas discharged from the SCR catalyst 12 is provided downstream of the SCR catalyst 12 with respect to the flow of exhaust gas. Then, a determination on the NOx purification capacity of the SCR catalyst 12 may be made in the same manner as in the first embodiment of the invention, on the basis of a degree of divergence between a NOx concentration that is detected by this NOx sensor 43 (hereinafter referred to as "an actual NOx concentration") and a target value of the NOx concentration that is set on the basis of an engine operation state (hereinafter referred to as "a target NOx concentration"). For example, as shown in FIG. 9, when the degree of divergence between the NOx concentrations (= the actual NOx concentration - the target NOx concentration) becomes larger than a predetermined criterial value, the target addition amount QT is increased (at the timing tl). Then, the degree of divergence is monitored after the target addition amount QT is increased. When this degree of divergence decreases as indicated by an alternate long and short dash line in FIG. 9, the target addition amount QT is corrected to increase, and the corrected value is learned as the new target addition amount QT.

On the other hand, when the degree of divergence increases as indicated by a solid line in FIG. 9, the process of burning out deposits is performed. It should be noted herein that the ratio of the actual NOx concentration to the target NOx concentration (the actual NOx concentration / the target NOx concentration) as well as the deviation between the target NOx concentration and the actual NOx concentration (the actual NOx concentration - the target NOx concentration) can be adopted as the aforementioned degree of divergence.

Besides, when it is assumed that the target NOx concentration does not change, for example, that the internal combustion engine is in steady operation etc., only the actual NOx concentration is monitored after the amount of the reducing agent is increased. When the actual NOx concentration has decreased, the process of learning the target addition amount QT (step S190) is performed. On the other hand, when the actual NOx concentration has increased, the process of burning out deposits (step S180) may be performed. The configuration in which a determination on the NOx purification capacity of the SCR catalyst 12 is thus made on the basis of the NOx concentration is not limited to the first embodiment of the invention but can also be applied in a similar manner to the second embodiment of the invention and the third embodiment of the invention.

Moreover, in each of the foregoing embodiments of the invention, for example, a determination on the NOx purification capacity of the SCR catalyst 12 can also be made on the basis of the amount of NOx discharged from the SCR catalyst 12. In this case, for example, when the amount of NOx discharged from the SCR catalyst 12 becomes larger than a target amount that is set on the basis of an engine operation state, it is determined that the NOx purification capacity of the SCR catalyst 12 is lower than the target capacity, and the process of increasing the addition amount is started. Then, when the amount of NOx discharged from the SCR catalyst 12 has decreased along with this increasing process, the process of learning the target addition amount QT (step S190) or the process of updating the correction amount QG (step S195) is performed. On the other hand, when the amount of NOx discharged from the SCR catalyst 12 has increased, the process of burning out deposits (step S180) is performed.

Furthermore, a determination on the NOx purification capacity of the SCR catalyst 12 can also be made on the basis of a difference ΔQN between the amount of NOx flowing into the SCR catalyst 12 per unit time and the amount of NOx discharged per unit time (= the amount of NOx flowing in - the amount of discharged NOx). In this case, for example, when the aforementioned difference ΔQN becomes smaller than a target value that is set on the basis of an engine operation state, it is determined that the NOx purification capacity of the SCR catalyst 12 is lower than the target capacity, and the process of increasing the addition amount of the reducing agent is started. Then, when the aforementioned difference ΔQN has increased along with this increasing process, the process of learning the target addition amount QT (step S190) or the process of updating the correction amount QG (step S195) is performed. On the other hand, when the aforementioned difference ΔQN has decreased, the process of burning out deposits (step S180) is performed.

Besides, a determination on the NOx purification capacity of the SCR catalyst 12 may also be made on the basis of a difference ΔCN between the concentration of NOx in exhaust gas flowing into the SCR catalyst 12 per unit time and the concentration of NOx in exhaust gas discharged per unit time (the concentration of NOx flowing in - the concentration of discharged NOx). In this case, for example, when the aforementioned difference ΔCN has become smaller than a target value that is set on the basis of an engine operation state, it is determined that the NOx purification capacity of the SCR catalyst 12 is lower than the target capacity, and the process of increasing the addition amount of the reducing agent is started. Then, when the aforementioned difference ΔCN has increased by this increasing process, the process of learning the target addition amount QT (step S190) or the process of updating the correction amount QG (step S195) is performed. On the other hand, when the aforementioned difference ΔCN has decreased, the process of burning out deposits (step S180) is performed.

In each of the foregoing embodiments of the invention or each of the modification examples, when the NOx purification capacity of the SCR catalyst 12 is detected again immediately after the performance of the process of burning out deposits and the detected NOx purification capacity has not risen to a predetermined level, it can also be determined that the SCR catalyst 12 fails to function normally due to a damage of the SCR catalyst 12. In particular, as exemplified in each of the foregoing embodiments of the invention, according to the configuration in which the NOx sensors are provided in the exhaust passage 11 upstream and downstream of the SCR catalyst 12 with respect to the flow of exhaust gas respectively, a determination on such an abnormality in the SCR catalyst 12 can be made with higher accuracy.

In each of the foregoing embodiments of the invention or each of the modification examples thereof, a filter that captures particulate matters in exhaust gas may be provided upstream of a region of the exhaust passage 11 to which the branch passage 11a is connected, with respect to the flow of exhaust gas. In this configuration, the amount of the particulate matters captured by the filter is monitored, and the temperature of exhaust gas is raised by carrying out post injection or the like when the amount of the particulate matters becomes larger than a predetermined amount. Thus, a filter regeneration process of burning out the particulate matters captured by the filter to restore the function of the filter is performed. Thus, the process of burning out deposits serves as the filter regeneration process, whereby the deposits may be burned out through the filter regeneration process. In this case, the filter regeneration process is performed when one of a condition that the NOx purification capacity of the SCR catalyst 12 have fallen along with the process of increasing the amount of reducing agent added and a condition that the amount of the particulate matters captured by the filter have become larger than a predetermined amount is fulfilled.

Although the example in which the aqueous solution of urea is used as the reducing agent has been presented, it is also possible to use, for example, other ammonic reducing agents such as ammonia compounds and the like. Although the diesel engine has been exemplified as the internal combustion engine to which the exhaust emission control apparatus according to the invention is applied, this internal combustion engine is not required to be a diesel engine, but may be, for example, a gasoline engine that is often operated in such a manner as to make the air-fuel ratio lean.

While the disclosure has been explained in conjunction with the specific exemplary embodiments thereof, it is evident that many alternatives, modifications, and variations will be apparent to those skilled in the art. Accordingly, the exemplary embodiments of the disclosure as set forth herein are intended to be illustrative, not limiting. There are changes that may be made without departing from the scope of the disclosure.

## Claims

1. An exhaust emission control apparatus for an internal combustion engine (10), **characterized by** comprising:
a urea selective reduction catalyst (12) that is provided in an exhaust passage (11) of the internal combustion engine (10); and
an addition valve (30) that adds a reducing agent to the selective reduction catalyst (12), wherein
the exhaust emission control apparatus performs an increasing process of increasing an amount of the reducing agent added from the addition valve (30), and
performs a process of burning out deposits when a NOx purification capacity of the selective reduction catalyst (12) has fallen along with performance of the increasing process.

2. The exhaust emission control apparatus for the internal combustion engine (10) according to Claim 1, wherein the exhaust emission control apparatus corrects a target addition amount of the addition valve (30) to increase and learns the corrected target addition amount as a new target addition amount when the NOx purification capacity of the selective reduction catalyst (12) has risen along with performance of the increasing process.

3. The exhaust emission control apparatus for the internal combustion engine (10) according to Claim 1 or Claim 2, wherein
the exhaust emission control apparatus performs the increasing process when it is determined that the NOx purification capacity of the selective reduction catalyst (12) is lower than a target capacity.

4. The exhaust emission control apparatus for the internal combustion engine (10) according to Claim 3, wherein
in the increasing process, the amount of the reducing agent added from the addition valve (30) is gradually increased in a period in which it is determined that the NOx purification capacity of the selective reduction catalyst (12) is lower than the target capacity.

5. An exhaust emission control apparatus for an internal combustion engine (10), **characterized by** comprising:
a urea selective reduction catalyst (12) that is provided in an exhaust passage (11) of the internal combustion engine (10); and
an addition valve (30) that adds a reducing agent to the selective reduction catalyst (12),
the exhaust emission control apparatus performs an increasing process of gradually increasing an amount of the reducing agent added from the addition valve (30) in a period in which it is determined that a NOx purification capacity of the selective reduction catalyst (12) is lower than a target capacity, and
performs a process of burning out deposits when a period of performance of the increasing process has reached a predetermined period.

6. The exhaust emission control apparatus for the internal combustion engine (10) according to Claim 5, wherein
the predetermined period is a period during which the amount of the reducing agent added approaches to reach a predetermined upper-limit.

7. An exhaust emission control method for an internal combustion engine (10), **characterized by** comprising the steps of:
performing an increasing process of increasing an amount of a reducing agent added from an addition valve (30) to a urea selective reduction catalyst (12) that is provided in an exhaust passage (11) of the internal combustion engine (10); and
performing a process of burning out deposits when a NOx purification capacity of the selective reduction catalyst has fallen along with performance of the increasing process.

8. An exhaust emission control method for an internal combustion engine (10), **characterized by** comprising the steps of:
performing an increasing process of gradually increasing an amount of a reducing agent added from an addition valve (30) to a urea selective reduction catalyst (12) that is provided in an exhaust passage (11) of the internal combustion engine (10), in a period in which it is determined that a NOx purification capacity of the selective reduction catalyst is lower than a target capacity; and
performing a process of burning out deposits when a period of performance of the increasing process has reached a predetermined period.
